# EUROPEAN PATENT SPECIFICATION

(11) **EP 1 311 457 B1**
(45) Date of publication and mention of the grant of the patent: **14.11.2007**
(21) Application number: 00991421.9
(22) Date of filing: 20.12.2000
(51) Int. Cl.: C01B 3/38

(54) **SPOX-ENHANCED PROCESS FOR PRODUCTION OF SYNTHESIS GAS**
SPOX-UNTERSTÜTZTES VERFAHREN ZUR HERSTELLUNG VON SYNTHESE GAS
PROCEDE FAVORISANT L'OXYDATION CATALYTIQUE PARTIELLE DE H2S POUR LA PRODUCTION DE GAZ DE SYNTHESE

(30) Priority: 25.07.2000 US 625710
(43) Date of publication of application: 21.05.2003
(73) Proprietor: ConocoPhillips Company, Houston, TX 77079 (US)
(72) Inventor: KELLER, Alfred, E., Ponca City, OK 74602-1267 (US); ALLISON, Joe, D., Ponca City, OK 74602-1267 (US); RAMANI, Sriram, Ponca City, OK 74602-1267 (US)
(74) Representative: Towler, Philip Dean
(86) International application number: PCT/US2000/034692
(87) International publication number: WO 2002/008119

(56) References cited:
- EP-A- 0 303 438
- FR-A- 2 702 675
- US-A- 5 720 901
- DATABASE WPI Section Ch, Week 199527 Derwent Publications Ltd., London, GB; Class A60, AN 1995-205005 XP002151004 & RU 2 023 655 C (BASHKIR GROZNEFTEKHIM SCI PRODN ASSOC), 30 November 1994 (1994-11-30)

## Description

### BACKGROUND OF THE INVENTION

### Field of the Invention

The present invention generally relates to processes for producing synthesis gas from light hydrocarbons employing a short contact time reactor. More particularly, the invention pertains to methods of increasing the yield of syngas in processes employing partial oxidation of methane or natural gas to products containing CO and H₂ by concurrent catalytic partial oxidation of H₂S to elemental sulfur and hydrogen.

### Description of Related Art

Many refineries face an abundant supply of lower alkanes, *i.e.,* C₁-C₄ alkanes such as methane, and relatively few means of converting them to more valuable products. Moreover, vast reserves of methane, the main component of natural gas, are available in many areas of the world, and natural gas is predicted to outlast oil reserves by a significant margin. There is great incentive to exploit these natural gas formations, however most natural gas formations are situated in areas that are geographically remote from population and industrial centers. The costs of compression, transportation, and storage make its use economically unattractive. To improve the economics of natural gas use, much research has focused on methane as a starting material for the production of higher hydrocarbons and hydrocarbon liquids, which are more easily transported than syngas.

The conversion of methane to higher hydrocarbons is typically carried out in two steps. In the first step, methane is reformed with water to produce a mixture of carbon monoxide and hydrogen (i.e., synthesis gas or syngas). In a second step, the syngas is converted to hydrocarbons, for example, using the Fischer-Tropsch process to provide fuels that boil in the middle distillate range, such as kerosene and diesel fuel, and hydrocarbon waxes. Syngas generation from methane typically takes place by one of three techniques. Steam reforming of methane is the most common, followed by partial oxidation, and autothermal reforming.

The partial oxidation of methane can be represented by the reaction shown in equation (1):

CH₄+ 1/2 O₂ → CO + 2H₂ (1)

At the same time, some of the methane burns completely, according to equation (2):

CH₄+ 2O₂ → CO₂ + 2H₂O (2)

Hence, syngas is typically a mixture of carbon monoxide and molecular hydrogen, generally having a hydrogen to carbon monoxide molar ratio in the range of 1:5 to 5:1, and may contain other gases such as carbon dioxide. Synthesis gas is not usually considered a commodity; instead, it is typically generated on-site for further processing. Synthesis gas is commonly used as a feedstock for conversion to alcohols (e.g., methanol), olefins, or saturated hydrocarbons (paraffins) according to the well-known Fischer-Tropsch process, and by other means. The resulting high molecular weight (e.g. C₅₀₊) paraffins, in turn, provide an ideal feedstock for hydrocracking, a feedstock for conversion to high quality jet fuel, and superior high octane value diesel fuel blending components.

Emerging technologies that have been developed to generate syngas from methane include a technique that entails exposing a mixture of methane and oxygen to a hot catalyst for a brief time, typically on the order of milliseconds, followed by cooling of the resultant gas stream. EPO Patent No. 303,438 describes a process for synthesis gas production by catalytic partial oxidation to overcome some of the disadvantages and costs of steam reforming. A monolith catalyst is used with or without metal addition to the surface of the monolith and the process operates at space velocities of 20,000-500,000 hr⁻¹. Conventional catalytic partial oxidation processes are also described, for example, in U.S. Patent Nos. 5,654,491, 5,639,929, 5,648,582 and in J. Catalysis 138, 267-282 (1992), the disclosures of which are incorporated herein by reference. Although in conventional short contact time syngas generation systems the syngas reaction can be self-sustaining once initiated, it has been shown that 10 - 15 % of the carbon initially present as methane can be lost to the formation of CO₂ in combustion via equation (2), above. This directly reduces the yield of syngas that can be obtained. Therefore it is desirable to use a syngas generation system that allows a better yield of carbon monoxide and hydrogen.

Further complicating the exploitation of the world's natural gas supply is the fact that many natural gas formations contain H₂S in concentrations ranging from trace amounts up to about 3-25% (by volume) hydrogen sulfide. For example, many of the catalysts that are conventionally used for the production of synthesis gas are poisoned by the presence of sulfur.

If the hydrocarbon conversion does proceed to some degree, the syngas product is typically contaminated by passed through H₂S and/or SO₂. The presence of H₂S or SO₂ generally diminishes the usefulness of the syngas or creates environmental safety concerns. It would be highly desirable in the natural gas exploitation industry to find a way to efficiently convert the light hydrocarbon content of the natural gas to synthesis gas without conducting an initial sulfur removal operation. In a related aspect of petroleum refining, some petroleum feed streams and separated fractions contain sulfur. Sulfur is typically undesirable in most petroleum refining processes and products. Refineries typically upgrade the quality of the various petroleum fractions by removing the sulfur before they are processed further. Hydrodesulfurization units are used to break down the sulfur compounds in the petroleum fractions and convert the sulfur to H₂S. In addition to hydrodesulfurization processes, other conversion processes in a typical refinery, such as fluid catalytic cracking, coking, visbreaking, and thermal cracking, produce H₂S from sulfur containing petroleum fractions. The H₂S from both the desulfurization processes and these conversion processes is typically removed from the gas streams or light liquid hydrocarbon streams using either chemical solvents based on alkanolamine chemistry or physical solvents. A circulating, regenerative H₂S removal system employing an absorption stage for H₂S pickup and a regeneration stage for H₂S rejection produces a concentrated stream of H₂S.

In conventional systems, this H₂S stream is then fed to a H₂S conversion unit, which converts the H₂S into a storable, saleable product such as elemental sulfur, sodium hydrosulfide solution, or sulfuric acid. Conversion of the H₂S to elemental sulfur is most common, mainly because elemental sulfur is the most marketable sulfur compound of those typically produced.

The process most commonly used to recover elemental sulfur from H₂S gas is the modified Claus sulfur recovery process. The conventional Claus process is well known in the art, and is also described in U.S. Pat. App. No. 09/624,715, the disclosure of which is incorporated herein by reference.

U.S. Pat. No. 5,720,901 describes a process for the catalytic partial oxidation of hydrocarbons in which nitrogen is present in the hydrocarbon feed mixture. An organic or inorganic sulfur-containing compound is present in the feed mixture in a sufficient concentration (i.e., 0.05 to 100 ppm) to reduce the presence of nitrogen by-products, particularly ammonia and hydrogen cyanide, in the products of the catalytic partial oxidation process. Hydrocarbon feedstocks used directly from naturally occurring reservoirs in which the sulfur content is significantly above the aforementioned limits may be subjected to a partial sulfur removal treatment before being employed in that process. A sulfur removal step is applied to the product stream if the carbon monoxide and/or hydrogen products of the process are to be utilized in applications that are sensitive to the presence of sulfur, such as Fischer-Tropsch synthesis.

It would be desirable to have a syngas production process than can avoid the need for an initial sulfur-removal step from H₂S-containing natural gas sources. It would also be desirable to have a syngas production process with improved yield and selectivity for CO and H₂ products compared to conventional syngas processes. Also needed are new and better ways to utilize H₂S gas streams arising from existing desulfurization processes.

### SUMMARY OF THE INVENTION

The present invention provides a method and catalysts as defined in the claims that improve the yield of syngas generation and selectivity for CO and H₂ products, at least in part by substituting H₂S partial oxidation for methane combustion in a syngas reactor. The partial oxidation of H₂S provides the heat necessary to sustain the syngas reaction at the desired temperature without consuming the methane or other light hydrocarbon. Hence, less methane is lost to complete combustion and yield of the product is increased. In accordance with certain embodiments of the invention, a process for producing synthesis gas is provided. The process comprises, contacting an H₂S-containing light hydrocarbon stream, in the presence of O₂, with a catalyst having activity for catalyzing the partial oxidation of the hydrocarbon to a product comprising CO and H₂ and also having activity for catalyzing the partial oxidation of H₂S to elemental sulfur and water, under reaction promoting conditions of temperature, flow rate, molar ratios of reactant gases, and reactant gas/catalyst contact time. The process also includes maintaining the reaction promoting conditions such that the reactions

H₂S + ½ O₂ → 1/x Sₓ + H₂O, (3)

where x equals 2, 6, or 8, and

CH₄+ 1/2 O₂ → CO + 2H₂ (1)

simultaneously occur and a process gas stream is obtained comprising CO, H₂, gaseous elemental sulfur and steam. The process further comprises condensing elemental sulfur from the process gas stream to provide a substantially desulfurized synthesis gas stream. The process also includes contacting the catalyst with a portion of the H₂S-containing light hydrocarbon stream for no more than about 10 milliseconds.

In some embodiments, a process for producing synthesis gas is provided that comprises providing a first gas stream containing a C₁-C₄ alkane, or mixture thereof, and, optionally, H₂S. Optionally, a second gas stream containing H₂S mixed with the first gas stream, such that a H₂S-containing hydrocarbon feed gas stream is produced having a H₂S : CH₄ molar ratio of about 1 : 10 to about 2 : 3. The process includes mixing the H₂S-containing hydrocarbon feed gas stream with an O₂-containing stream to form a reactant gas stream, the reactant gas stream having a CH₄ : O₂ molar ratio of about 1.5 : 1 to about 2.2 : 1. The process also includes passing the reactant gas stream over a catalyst such that a portion of the reactant gas contacts the catalyst for no more than about 10 milliseconds. The selected catalyst is capable of catalyzing the partial oxidation of to CO and H₂ and also capable of catalyzing the partial oxidation of H₂S to elemental sulfur and water under reaction promoting conditions. The process further includes maintaining reaction-promoting conditions of temperature, molar ratios of reactant gas components, and flow rate such that a gaseous product stream comprising CO, H₂, 1/x Sₓ and H₂O is obtained, wherein X= 2, 6, or 8. The gaseous product stream is then cooled to the condensation temperature of elemental sulfur, or lower, such that elemental sulfur condenses from the product stream and an at least partially desulfurized gaseous product stream is obtained. Optionally, elemental sulfur product is recovered. Any residual gaseous sulfur-containing components may, optionally, be removed from the at least partially desulfurized gaseous product stream using, for example, a sulfur absorbing sulfur absorbing material such as zinc or iron oxide. Substantially sulfur-free synthesis gas, preferably in high yield, having a H₂:CO molar ratio of about 2:1 and containing less than about 10 vol. % CO₂ is recovered from said product stream.

Also provided according to certain embodiments of the invention is a method for improving the yield of a syngas generation system, comprising providing a first gas stream containing a light hydrocarbon, mixing a second gas stream containing H₂S with the first gas stream to form a feed gas stream, mixing the feed gas stream with an oxygen containing stream to form a mixed feed stream, contacting the mixed feed stream with a hot catalyst to form a product stream, and removing syngas and elemental sulfur from the product stream. In certain embodiments, the method further comprises removing residual H₂S from the product stream.

According to some embodiments the step of mixing a second gas stream comprising H₂S with the first gas stream to form a feed gas stream is carried out at temperatures up to about 300°C. In some embodiments the step of contacting the feed gas stream with a hot catalyst to form a product stream is carried out at temperatures above 500 °C, preferably between about 850 and 1,500°C.

In some embodiments the method of improving syngas yield includes converting less than 10 vol.% of the light hydrocarbon to carbon dioxide.

Another aspect of the present invention provides a system for the partial oxidation of light hydrocarbons, comprising a hydrocarbon injection line, an H₂S injection line in communication with said hydrocarbon injection line, an oxygen injection line in communication with said hydrocarbon injection line, a reaction zone receiving gases from said hydrocarbon, H₂S and oxygen injection lines and including a catalyst suitable for catalyzing said hydrocarbon to form CO and H₂. In some embodiments the system includes a mixing zone upstream of the reaction zone, the mixing zone receiving gases from the hydrocarbon and the H₂S lines, wherein the temperature of the mixing zone is up to about 300°C. In certain embodiments the system comprises a thermal barrier between the mixing zone and the reaction zone. In certain embodiments the oxygen injection line communicates with the reaction zone, and in some embodiments the mixing zone receives oxygen from said oxygen injection line. According to some embodiments the temperature of the reaction zone is between about 850-1,500°C. Preferably the system includes at least one cooling zone downstream of the reaction zone, and at least one tailgas processing unit downstream of the final cooling zone.

In yet another aspect of the present invention is provided a method for improving the yield of a syngas generation system. The method comprises providing a gas stream comprising a light hydrocarbon, mixing a second gas stream comprising H₂S with the first gas stream to form a feed gas stream, while maintaining the temperature of the feed gas stream below about 500°C, and preferably no more than about 300°C. The method also includes contacting the feed gas stream with a hot catalyst, in the presence of O₂, to form a product stream wherein less than 10% of the carbon atoms in the light hydrocarbon is converted to carbon dioxide, and the removing syngas and elemental sulfur from the product stream. In some embodiments the method comprises mixing O₂ with the light hydrocarbon prior to contacting the feed gas stream with a hot catalyst. In some embodiments the O₂ is mixed with the light hydrocarbon during the contacting of the feed gas stream with a hot catalyst.

These and other embodiments, features and advantages of the present invention will become apparent with reference to the following drawings and description.

### BRIEF DESCRIPTION OF THE DRAWINGS

For a more detailed description of the present invention, reference will now be made to the accompanying drawings, wherein:
**Fig. 1** is an enlarged cross-sectional view of a short contact time reactor and cooling zone constructed in accordance with a preferred embodiment of the present invention; and
**Fig. 2** is a schematic diagram of the components of one preferred embodiment of a syngas-elemental sulfur production system including the reactor of **Fig. 1**.

### DETAILED DESCRIPTION OF PREFERRED EMBODIMENTS

Several schemes for carrying out catalytic partial oxidation (CPOX) of hydrocarbons in a short contact time reactor have been described in the literature. For example, L.D. Schmidt and his colleagues at the University of Minnesota describe a millisecond contact time reactor in U.S. Pat. No. 5,648,582 and in J. Catalysis 138, 267-282 (1992) for use in the production of synthesis gas by direct oxidation of methane over a catalyst such as platinum or rhodium. A general description of major considerations involved in operating a reactor using millisecond contact times is given in U.S. Patent No. 5,654,491. The disclosures of the above-mentioned references are incorporated herein by reference.

### Syngas Production Assembly

The present inventors have developed an assembly and process for the enhanced production of synthesis gas. In the new syngas generation process the catalytic partial oxidization of H₂S ("SPOX") to elemental sulfur and water and the catalytic net partial oxidization (CPOX) of methane are carried out together in a short (<10 milliseconds) contact time reactor assembly.- The SPOX and CPOX reactions are carried out concurrently in a syngas production assembly that employs a short contact time flow reactor that is capable of withstanding temperatures up to about 1,500°C. Without wishing to be bound by a particular theory, the inventor suggests that by substituting the heat of partial oxidation of H₂S for the combustion of methane, the new syngas production process provides the heat necessary to maintain the syngas reaction at the desired temperature without giving up the methane to combustion products. This, in turn, results in a higher overall yield for the process.

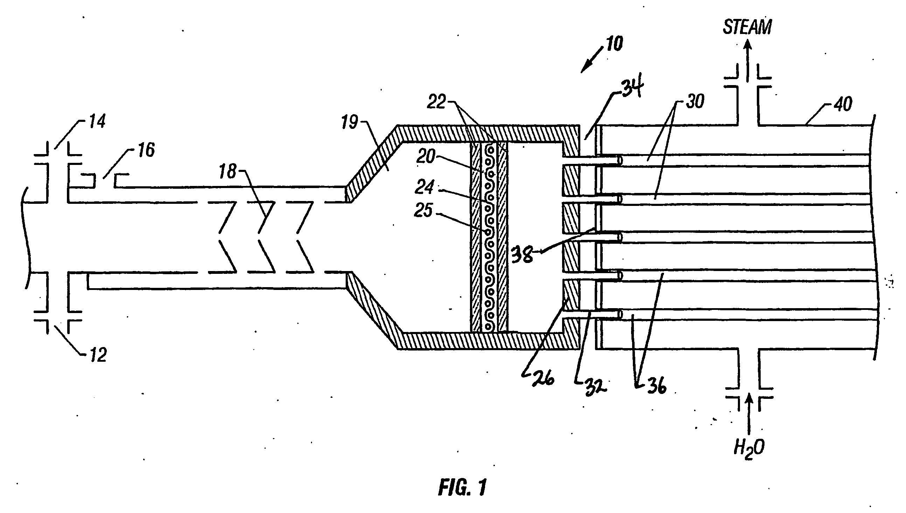

Referring initially to **Fig. 1**, reactor 10 of a preferred syngas production assembly is shown. Reactor 10 includes feed injection openings 12, 14, and 16, a mixing zone 19, a reaction zone 20 and a cooling zone 30. Reaction zone 20 preferably includes a thermal radiation barrier 22 positioned immediately upstream of a catalytic device 24 in a fixed-bed configuration. Radiation barrier 22 is preferably a porous ceramic or refractory material that is suited to withstand operating temperatures and provide sufficient thermal insulation, such as those described in U.S. Patent 4,038,036 (Beavon), which is incorporated herein by reference. In commercial scale operations the reactor may be constructed of, or lined with, any suitable refractory material that is capable of withstanding the temperatures generated by the exothermic CPOX and SPOX reactions.

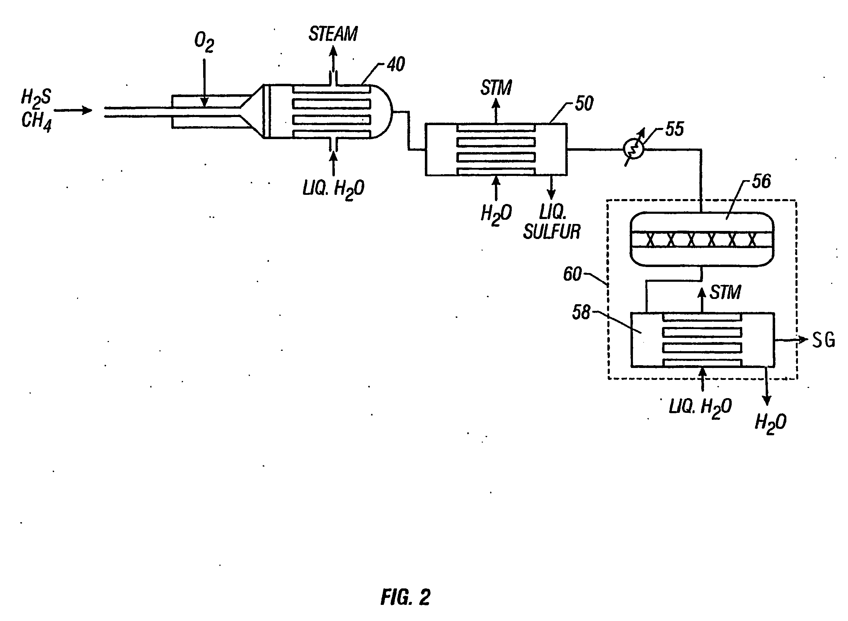

The reactor 10 contains a catalyst device 24 positioned in the flow path of the feed gas mixture. Referring now to **Fig. 2**, the reactor also includes, adjacent reaction zone 20, a cooling zone 30 that includes ceramic ferrules 32 embedded in refractory material 26, and a tube sheet 34 containing a plurality of thermally conductive tubes 36. Tubes 36 of cooling zone 30 extend from the process (reacted) gas outlet of reactor 10 through a heat exchanger 40, such as a waste heat or firetube boiler, as illustrated in **Fig. 2**, for cooling the reacted gases. Tube sheet 34 is a divider between the process gas and the boiling water where the hot process gas exits the reactor and enters boiler 40. The tubes 36 and tube sheet 34 are preferably made of carbon steel. The tube sheet forces the process gas to exit the reactor by going through the inside of tubes 36. Boiling water, contained by the shell of the heat exchanger surrounds the outside of tubes 36. Since the carbon steel of the tubes and tube sheet cannot stand the high temperatures of the process gas (i.e., about 1,300°C), temperature protection for the metal in both is needed. For tubes 36 and for most of the tube sheet 34, this protection is afforded by the boiling water. Since the boiling water remains at a constant temperature, and since the metal conducts heat so readily, the tubes and most of the tube sheet attain temperatures only slightly above the temperatures of the boiling water (i.e., about 100°C). This is not the case for the portions of the tube sheet where tubes 36 connect at joints 38. Without thermal protection, these joints and the first part of the tube would see temperatures far exceeding the safe operating limits for the metal. The refractory covering 26 and ceramic ferrules (tube inserts) 32 provide insulation for these relatively unprotected areas of metal. Thus, only metal surfaces that are adequately exposed to the boiling water will encounter the hot gases.

Following boiler 40 is a sulfur condenser 50 for further cooling the process gas and providing for the removal of liquid sulfur product. In processes in which the cooled syngas mixture that emerges from condenser 50 still contains an undesirable amount of unreacted H₂S or other sulfur-containing gas, the assembly may further include a heater 55 and at least one tailgas cleanup unit 60. Tailgas cleanup unit 60 includes a sulfur absorbing material 56 and another condenser 58. The sulfur absorbing material is preferably zinc or iron oxide. Additionally, a conventional quench tower may follow in line after the final tailgas cleanup unit if it is desired to remove the water from the gas exiting the CPOX/SPOX reactor.

Referring again to **Fig. 1**, the catalyst device 24 is preferably in the form of a porous ceramic monolith (not shown), that also supports one or more catalytic components. The catalyst device is configured so that only a first fraction of the feed gas mixture contacts the catalytically active surfaces of the catalyst device, while the balance of the reactant gas mixture serves to quickly cool the first fraction and prevent the oxidation reaction from proceeding too far. Preferably the catalyst bed or device 24 is held between two porous refractory disks 22, such as alpha-alumina, which also serve as thermal barriers. In a laboratory scale reactor the monoliths are preferably about 25 micrometers to about 2.5 millimeters in diameter.

Suitable catalytic components that are supported on a suitable refractory support are rhodium and samarium on an alumina or PSZ monolith. Those catalysts are prepared by depositing Rh (e.g., about 4-6 wt%) onto a layer of Sm (e.g., about 5 wt%) that coats a PSZ monolith. PSZ monoliths are commercially available from Vesuvius Hi-Tech Ceramics Inc., Alfred Station, New York. Other alternative catalyst structures, or devices, include a disk with multiple perforations formed therethrough, a honeycomb-like structure, an etched foil and any other structure that provides the desired amount of transparency to permit the required 10 millisecond or less contact time to effect the desired partial oxidation reactions. A detailed discussion of catalyst structure and composition can be found in U.S. Patent No. 5,654,491 to Goetsch et al.*.*

### Process for Producing Synthesis Gas

Referring again to **Fig. 1**, in operation, a stream of light hydrocarbon, such as methane, is fed into feed injection opening 12. A stream of H₂S is fed into a second feed injection opening 14. Air or oxygen is fed into the third feed injection opening 16, which is preferably positioned close to catalyst 24. It should be understood that the feed injection openings can be configured differently from the configuration shown in **Fig. 1** without affecting the principles or operation of the present system. For example, O₂ injection opening 16 could be placed such that the oxygen is mixed with the light hydrocarbon during the contacting of the feed gas stream with a hot catalyst. Such a configuration may help reduce the occurrence of unwanted side reactions that might otherwise rapidly occur during or after mixing of O₂ with the H₂S and hydrocarbon components but prior to contacting the catalytic surfaces of the reaction zone.

As another alternative, the hydrocarbon feed stream may initially include an amount of H₂S. For example, a feed obtained directly from a natural gas reservoir may contain a small amount or even 3-25 vol.% hydrogen sulfide. In this case the separate H₂S feed stream is either omitted entirely or the amount of H₂S added from an external source via injection opening 14 is regulated so as to maintain a favorable molar ratio of H₂S to CH₄, as discussed in more detail below. In either alternative, pure oxygen, via inlet 16, is preferably mixed with the hydrocarbon-H₂S gas feed immediately before contacting the feed gases with a catalyst. Air, or a mixture of air and oxygen can be substituted for the pure oxygen. However, since the presence of N₂ in the reactant gas mixture can be problematic (i.e., forming unwanted nitrogen-containing compounds), it is usually preferable to use pure oxygen instead of air.

As the feed gases from feed injection openings 12, 16 and, optionally, 14 flow toward catalytic device 24, they are subjected to thorough mixing by static mixer 18, which can be simply a series of vanes that extend into the flow path of the reactant gas mixture. During mixing, the feed gases are shielded by radiation barrier 22 from radiant heat that is generated downstream in the process. It is preferred that the temperature on the upstream side of barrier 22 be in the range of about 20°C to about 300°C, and no more than about 500°C. Preheating the feed gases above about 300°C is generally not desirable because excessive heat can cause unwanted homogeneous reactions to occur that reduce the selectivity of the process for the desired CO, H₂, elemental sulfur and water products. It has been observed in the present studies that feed gas temperatures up to about 300°C tend to help initiate the CPOX and SPOX reactions. It is highly preferred that there be a minimum of void or dead spaces in the areas of the reactor that are occupied by the mixing reactant gas in order to minimize the opportunity for gas stagnation and undesirable combustion reactions to occur before the reactant gas stream comes into contact with hot catalyst.

After the gases pass barrier 22, they flow past catalytic device 24 and are simultaneously heated to more than 500°C, preferably about 850-1,500°C. The gas flow rate is preferably maintained such that the contact time for the portion of the gas that contacts the catalyst is no more than about 10 milliseconds and more preferably from about 1 to 5 milliseconds. This degree of contact produces a favorable balance between competing reactions and produces sufficient heat to maintain the catalyst at the desired temperature. Elemental sulfur is produced by catalyzed partial oxidation (SPOX) according to equation (3):

H₂S + ½ O₂ → 1/x Sₓ + H₂O (3)

where x equals 2, 6, or 8, with x = 2 being the most likely. At the same time exposure to the hot catalyst and oxygen partially oxidizes the hydrocarbons in the feed according to the CPOX reaction:

CH₄+ 1/2O₂ → CO + 2H₂ (1)

Both reactions are catalyzed in the same reaction zone, preferably on the same catalyst device.

Regardless of whether H₂S is added to the light hydrocarbon via a separate stream, or whether all or part of the H₂S is included in the light hydrocarbon feed stream, it is preferred to keep the stoichiometric molar ratio of H₂S: CH₄ in the feed gas mixture at about 1: 10 to 2:3, and it is preferred to keep the stoichiometric molar ratio of CH₄ : O₂ at about 1.5 : 1 to 2.2 : 1, to favor the concurrent CPOX and SPOX reactions. This is best accomplished by monitoring and adjusting the composition of the feed gases during operation, temperature, and flow rates, as further described below. By establishing and maintaining reaction conditions favoring SPOX over the hydrocarbon combustion reaction of equation (2), the conversion of the carbon atoms contained in the hydrocarbon molecules to CO₂ is preferably restricted to less than 10 vol.%. In this way the CO₂ content of the product gases is minimized and the selectivity for CO and H₂ products is enhanced compared to what is usually obtainable with conventional CPOX syngas generation processes.

In many cases it is helpful to heat the catalytic device 24 using external means at least at the start of the process, so as to initiate the exothermic reactions on the catalyst structure. Once the system is running, it is preferably run adiabatically or nearly adiabatically (i.e., without loss of heat), so as to reduce the formation of carbon (e.g., coke) on the surface of the gauze catalyst. Preferably the catalyst structure is heated sufficiently as a result of the exothermic chemical reactions occurring at its surface to perpetuate the CPOX and SPOX reactions under favorable conditions of reactant gas molar ratios and catalyst contact time. Heating by external means can allow for increases in the rate at which feed gas can be passed through the catalyst structure while still obtaining desirable reaction products.

The rate of feed of H₂S into the system is controlled and adjusted so that the heat generated by the oxidation of the H₂S is sufficient to maintain the desired temperature in reaction zone 20 and thus reduce the amount of the light hydrocarbon that is completely combusted. Hence, the mole ratio of H₂S to light hydrocarbon in the feed is preferably in the range of from about 1:10 to about 2:3. Where the light hydrocarbon is methane, a preferred ratio of H₂S to methane is 2:3.

The superficial contact time of the feed gas stream with a preferred embodiment of gauze catalytic device 24 is less than about 10 milliseconds, and typically within a range of about 1-10milliseconds. When used in the present invention, it is preferred that the superficial contact time of the feed gas stream with the catalyst be less than about 5 milliseconds, more preferably less than about 2 milliseconds. Superficial contact time is inversely proportional to the term "space velocity" that is used in many chemical process descriptions. Although for ease in comparison with published space velocity values of others, space velocities at standard conditions are used to describe the present studies, it is well recognized in the art that residence time is the inverse of space velocity and that the disclosure of high space velocities equates to low residence times.

Referring now to **Fig. 2**, from reaction zone 20, the reacted gases are rapidly cooled in cooling zone 30, preferably entering a heat exchanger such as firetube boiler 40, where they are cooled to below 450°C, and preferably to below 340°C. As it is preferred that heat removed from the partially oxidized gases can be recaptured in steam heating or the like. The rapid cooling that occurs in the boiler drops the temperature of the reacted gases to below about 450°C and thus ceases the CPOX and SPOX reactions.

The cooled, partially oxidized gases flow from boiler 40 into condenser 50, where they are cooled further until the dew point of the elemental sulfur is reached. This allows for the removal of elemental sulfur, as desired, from the process. Once the bulk of the elemental sulfur is removed, the partially oxidized gases are reheated in heater 55 and passed through a tailgas converter unit 60. More specifically, in each converter unit 60, the hot gas stream is passed over a bed of sulfur absorbing material such as zinc or iron oxide. In this bed, any elemental sulfur is converted to metal sulfide and retained in the bed. The effluent from the sulfur absorber is then preferably cooled sufficiently to condense the bulk of any remaining water from the gas stream. The synthesis gas, which is substantially free of sulfur-containing gases, is recovered and may be fed directly into another process such as a methanol generation plant or a Fischer-Tropsch operation.

While a preferred embodiment of the present invention has been shown and described, it will be understood that variations can be to the preferred embodiment, without departing from the scope of the present invention. For example, the mixing process can be altered or replaced with an active mixer, the thermal barrier can be modified, the structure and composition of the catalyst can be varied, and the tail gas treatment steps can be modified. The foregoing detailed description and examples have been given for clarity of understanding only. No unnecessary limitations are to be understood therefrom. The invention is not limited to the exact details shown and described, for variations obvious to one skilled in the art will be included within the invention defined by the claims.

## Claims

1. A process for producing synthesis gas comprising:
providing a H₂S-containing hydrocarbon feed gas stream containing light hydrocarbon and H₂S, wherein the H₂S: light hydrocarbon molar ratio is about 1 : 10 to about 2 : 3;
mixing said H₂S-containing hydrocarbon feed gas stream with an O₂-containing stream to form a reactant gas stream, said reactant gas stream having a CH₄ : O₂ molar ratio of about 1.5 : 1 to about 2.2 : 1;
passing said reactant gas stream over a catalyst such that a portion of said reactant gas contacts said catalyst for no more than about 10 milliseconds, wherein said catalyst comprises rhodium and samarium on a refractory support;
maintaining reaction-promoting conditions of temperature, molar ratios of reactant gas components, and flow rate such that a gaseous product stream comprising CO, H₂, 1/x Sₓ and H₂O is obtained, wherein X=2; 6 or 8;
cooling said gaseous product stream to the condensation temperature of elemental sulfur, or lower, such that elemental sulfur condenses from said product stream and an at least partially desulfurized gaseous product stream is obtained; and
recovering synthesis gas from said product stream.

2. The process of claim 1 wherein said refractory support is alumina or partially stabilized (MgO) zirconia;

3. The process of claim 1 or claim 2 wherein said light hydrocarbon is a C₁-C₄ alkane, or mixture thereof.

4. The process of any one of claims 1 to 3 wherein said light hydrocarbon is methane.

5. The process of any one of claims 1 to 4 wherein said H₂S-containing hydrocarbon feed gas stream is obtained directly from a natural gas reservoir and contains 3-25 vol.% H₂S.

6. The process of any one of claims 1 to 4 wherein said H₂S-containing hydrocarbon feed gas stream is formed by mixing a first gas stream containing a light hydrocarbon with a second gas stream containing H₂S.

7. The process according to claim 6 wherein said mixing is carried out at temperatures up to about 300°C.

8. The process of any one of claims 1 to 7 further comprising recovering condensed elemental sulfur product.

9. The process of any one of claims 1 to 8 further comprising removing a residual gaseous sulfur-containing component from said at least partially desulfurized gaseous product stream.

10. The process according to claim 9 wherein said residual gaseous sulfur-containing component is H₂S.

11. The process according to any one of claims 1 to 10 wherein contacting the feed gas stream with the hot catalyst to form a product stream is carried out at temperatures ranging from about 850 to about 1,500°C.

12. The process method according to any one of claims 1 to 11 wherein less than 10% of the carbon atoms in the light hydrocarbon molecules are converted to carbon dioxide.

## Patentansprüche

1. Verfahren zur Herstellung eines Synthesegases umfassend:
Bereitstellen eines H₂S-haltigen Kohlenwasserstoffeinsatzgasstromes, welcher leichten Kohlenwasserstoff und H₂S enthält, wobei das Molverhältnis von H₂S : leichter Kohlenwasserstoff ungefähr 1:10 bis ungefähr 2 : 3 beträgt;
Vermischen des H₂S-haltigen Kohlenwasserstoffeinsatzgasstromes mit einem O₂-haltigen Strom, um einen Reaktionsgasstrom zu bilden, wobei der Reaktionsgasstrom ein Molverhältnis von CH₄: O₂ von ungefähr 1,5 : 1 bis ungefähr 2,2: 1 aufweist;
Leiten des Reaktionsgasstromes über einen Katalysator, so dass ein Teil des Reaktionsgases mit dem Katalysator für nicht mehr als ungefähr als ungefähr 10 ms in Kontakt kommt, wobei der Katalysator Rhodium und Samarium auf einem feuerfesten Träger umfasst;
Beibehalten der die Reaktion fördernden Bedingungen der Temperatur, der Molverhältnisse der Reaktionsgasbestandteile und der Durchflussgeschwindigkeit, so dass ein gasförmiger Produktstrom, welcher CO, H₂, 1/x Sₓ und H₂O umfasst, erhalten wird, wobei x = 2, 6 oder 8;
Abkühlen des gasförmigen Produktstromes auf die Kondensationstemperatur von elementarem Schwefel oder darunter, so dass elementarer Schwefel aus dem Produktstrom auskondensiert und ein wenigstens teilweise entschwefelter gasförmiger Produktstrom erhalten wird; und
Rückgewinnen des Synthesegases aus dem Produktstrom.

2. Verfahren nach Anspruch 1, wobei der feuerfeste Träger aus Aluminiumoxid oder teilweise stabilisiertem (MgO) Zirkondioxid besteht.

3. Verfahren nach Anspruch 1 oder Anspruch 2, wobei der leichte Kohlenwasserstoff ein C₁ - C₄ -Alkan oder eine Mischung dieser ist.

4. Verfahren nach einem der Ansprüche 1 bis 3, wobei der leichte Kohlenwasserstoff Methan ist.

5. Verfahren nach einem der Ansprüche 1 bis 4, wobei der H₂S-haltige Kohlenwasserstoffeinsatzgasstrom direkt aus einem Erdgasreservoir erhalten wird und 3 bis 25 Vol.-% H₂S enthält.

6. Verfahren nach einem der Ansprüche 1 bis 4, wobei der H₂S-haltige Kohlenwasserstoffeinsatzgasstrom gebildet wird, indem ein erster Gasstrom, enthaltend einen leichten Kohlenwasserstoff, mit einem zweiten Gasstrom, enthaltend H₂S, vermischt wird.

7. Verfahren nach Anspruch 6, wobei das Mischen bei Temperaturen von bis zu 300°C durchgeführt wird.

8. Verfahren nach einem der Ansprüche 1 bis 7, des Weiteren umfassend das Rückgewinnen von kondensiertem elementarem Schwefelprodukt.

9. Verfahren nach einem der Ansprüche 1 bis 8, des Weiteren umfassend das Entfernen eines gasförmigen schwefelhaltigen Restbestandteils (residual gaseous sufurcontaining component) aus diesem wenigstens teilweise entschwefelten gasförmigen Produktstrom.

10. Verfahren nach Anspruch 9, wobei der gasförmige schwefelhaltige Restbestandteil H₂S ist.

11. Verfahren nach einem der Ansprüche 1 bis 10, wobei das in Kontaktbringen des Einsatzgasstromes mit dem heißen Katalysator zur Bildung eines Produktstromes bei Temperaturen in dem Bereich von ungefähr 850 bis ungefähr 1500°C durchgeführt wird.

12. Verfahren nach einem der Ansprüche 1 bis 11, wobei weniger als 10% der Kohlenstoffatome in den leichten Kohlenwasserstoffmolekülen in Kohlenstoffdioxid umgewandelt werden.

## Revendications

1. Procédé pour la production de gaz de synthèse, comprenant les étapes consistant à :
fournir un courant d'hydrocarbure gazeux d'alimentation contenant H₂S, qui contient un hydrocarbure léger et du H₂S, dans lequel le rapport molaire H₂S:hydrocarbure léger est d'environ 1:10 à environ 2:3;
mélanger ledit courant d'hydrocarbure gazeux d'alimentation contenant H₂S avec un courant contenant O₂ pour former un courant de gaz réactionnels, ledit courant de gaz réactionnels ayant un rapport molaire CH₄:O₂ d'environ 1,5:1 à environ 2,2:1 ;
faire passer ledit courant de gaz réactionnels sur un catalyseur de sorte qu'une partie dudit gaz réactionnel entre en contact avec ledit catalyseur pendant un temps non supérieur à environ 10 millisecondes, ledit catalyseur comprenant du rhodium et du samarium sur un support réfractaire ;
maintenir des conditions, favorisant la réaction, de température, de rapports molaires des constituants gazeux réactionnels et de débit, de sorte qu'un courant de produits gazeux comprenant CO, H₂, 1/xSₓ et H₂O soit obtenu, où x = 2, 6 ou 8 ;
refroidir ledit courant de produits gazeux à la température de condensation du soufre élémentaire, ou à une température plus basse, de sorte que le soufre élémentaire se condense à partir dudit courant de produits et qu'un courant de produit gazeux au moins partiellement désulfuré soit obtenu ; et
recueillir du gaz de synthèse à partir dudit courant de produit.

2. Procédé suivant la revendication 1, dans lequel ledit support réfractaire est de l'alumine ou de la zircone partiellement stabilisée (MgO).

3. Procédé suivant la revendication 1 ou la revendication 2, dans lequel ledit hydrocarbure léger est un alcane en C₁ à C₄ ou un mélange de tels alcanes.

4. Procédé suivant l'une quelconque des revendications 1 à 3, dans lequel ledit hydrocarbure léger est le méthane.

5. Procédé suivant l'une quelconque des revendications 1 à 4, dans lequel ledit courant d'hydrocarbure gazeux d'alimentation contenant H₂S est obtenu directement à partir d'un réservoir de gaz naturel, et contient 3 à 25 % en volume de H₂S.

6. Procédé suivant l'une quelconque des revendications 1 à 4, dans lequel ledit courant d'hydrocarbure gazeux d'alimentation contenant H₂S est formé en mélangeant un premier courant gazeux contenant un hydrocarbure léger avec un second courant gazeux contenant H₂S.

7. Procédé suivant la revendication 6, dans lequel ledit mélange est effectué à des températures allant jusqu'à environ 300°C.

8. Procédé suivant l'une quelconque des revendications 1 à 7, comprenant en outre la récupération du produit consistant en soufre élémentaire condensé.

9. Procédé suivant l'une quelconque des revendications 1 à 8, comprenant en outre l'élimination d'un constituant gazeux résiduel contenant du soufre dudit courant de produits gazeux au moins partiellement désulfuré.

10. Procédé suivant la revendication 9, dans lequel ledit constituant gazeux résiduel contenant du soufre est H₂S.

11. Procédé suivant l'une quelconque des revendications 1 à 10, dans lequel la mise en contact du courant gazeux d'alimentation avec le catalyseur chaud pour former un courant de produits est effectuée à des températures comprises entre environ 850 et environ 1500°C.

12. Procédé suivant l'une quelconque des revendications 1 à 11, dans lequel une proportion inférieure à 10 % des atomes de carbone dans les molécules de l'hydrocarbure léger est convertie en dioxyde de carbone.
